# FASCICULE DE BREVET EUROPEEN

(11) **EP 1 396 684 B1**
(45) Date de publication et mention de la délivrance du brevet: **02.11.2006**
(21) Numéro de dépôt: 03292174.4
(22) Date de dépôt: 04.09.2003
(51) Int. Cl.: F24C 7/04, F24H 3/00

(54) **Dispositif de chauffage électrique**
Elektrische Heizeinrichtung
Electrical heating device

(30) Priorité: 04.09.2002 FR 0210932
(43) Date de publication de la demande: 10.03.2004
(73) Titulaire: Thermor Industrie, 45140 Saint-Jean-de-la-Ruelle (FR)
(72) Inventeur: Thierry, David, 45130 Meung sur Loire (FR)
(74) Mandataire: Kaspar, Jean-Georges

(56) Documents cités:
- FR-A- 2 593 273
- FR-A- 2 805 334
- GB-A- 296 866
- GB-A- 360 571
- GB-A- 429 057
- GB-A- 811 321
- GB-A- 1 008 601
- US-A- 5 047 786
- US-A- 5 606 639
- US-A- 5 838 878

## Description

L'invention est relative à un dispositif de chauffage électrique, du type comportant une enveloppe et deux corps de chauffe disposés l'un au-dessus de l'autre à l'intérieur de ladite enveloppe.

Le document FR 2 805 334 décrit un dispositif de chauffage électrique comportant deux enveloppes. Chaque enveloppe contient un corps de chauffe s'étendant sensiblement horizontalement. Chaque enveloppe présente une conformation allongée sensiblement horizontale dont la fermeture est réalisée par des conformations à ailettes sensiblement verticales, de manière à homogénéiser la température de radiation de l'enveloppe. Chaque corps de chauffe comporte un revêtement réalisé du côté des conformations à ailettes sensiblement verticales, de manière à émettre plus de rayonnement calorifique en direction des conformations à ailettes sensiblement verticales qu'en direction de la face avant de l'enveloppe.

Le dispositif de chauffage électrique du document FR 2 805 334 donne généralement satisfaction en permettant d'obtenir un fonctionnement mixte en radiation et en convection, mais ne permet pas un fonctionnement prédominant en radiation.

Un autre document montrant un dispositif de chauffage électrique est représenté par GB-A- 811 321.

Un but de l'invention est de remédier aux inconvénients de la technique connue, en proposant un appareil de chauffage électrique fonctionnant en convection et en radiation, et présentant une température de surface homogène inférieure à 75°C sur la face avant de l'enveloppe.

L'invention a pour objet un dispositif de chauffage électrique, fonctionnant en convection et en radiation, du type comportant une enveloppe et deux corps de chauffe disposés l'un au-dessus de l'autre à l'intérieur de ladite enveloppe, chaque corps de chauffe comportant au moins une aile orientée sensiblement verticalement à l'intérieur de l'enveloppe ; et que le corps de chauffe supérieur est disposé en retrait par rapport au corps de chauffe inférieur, de manière à homogénéiser la température de la face avant de l'enveloppe.

Selon d'autres caractéristiques alternatives de l'invention :
- la puissance du corps de chauffe supérieur est comprise entre la moitié et les trois quarts de la puissance du corps de chauffe inférieur ;
- la puissance du corps de chauffe supérieur est voisine des deux tiers de la puissance du corps de chauffe inférieur ;
- la longueur du corps de chauffe supérieur est inférieure à la longueur du corps de chauffe inférieur ;
- chaque corps de chauffe présente une conformation à deux ailes sensiblement symétriques par rapport à l'élément chauffant central du corps de chauffe ;
- chaque aile est en forme de plaque sensiblement rectangulaire orientée verticalement à l'intérieur de ladite enveloppe ;
- le corps de chauffe supérieur est disposé dans un plan en retrait par rapport au plan du corps de chauffe inférieur d'une distance comprise entre un et cinq centimètres ;
- l'enveloppe comporte des passages de circulation d'air à travers l'enveloppe ;
- les corps de chauffe sont agencés pour canaliser l'air circulant à l'arrière du corps de chauffe inférieur et à l'avant du corps de chauffe supérieur.

L'invention sera mieux comprise grâce à la description qui va suivre, donnée à titre d'exemple non limitatif en référence aux dessins annexés dans lesquels :
- la Figure 1: représente schématiquement une vue en élévation dans le sens de la flèche I de la Figure 2 d'un dispositif de chauffage selon l'invention dont la face avant a été enlevé ;
- la Figure 2: représente schématiquement une vue en coupe selon la ligne II-II de la Figure 1 d'un dispositif de chauffage selon l'invention.

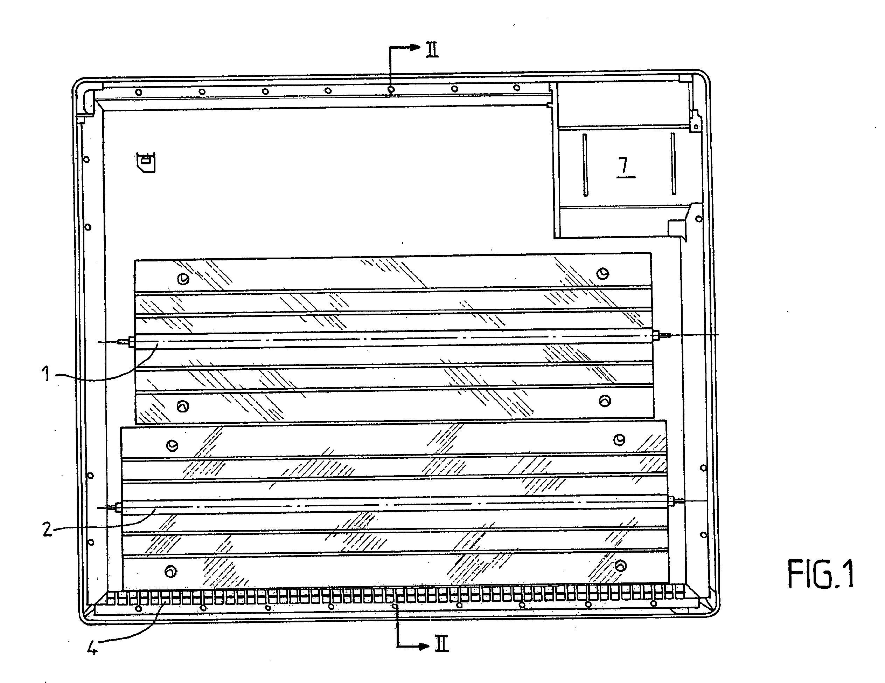

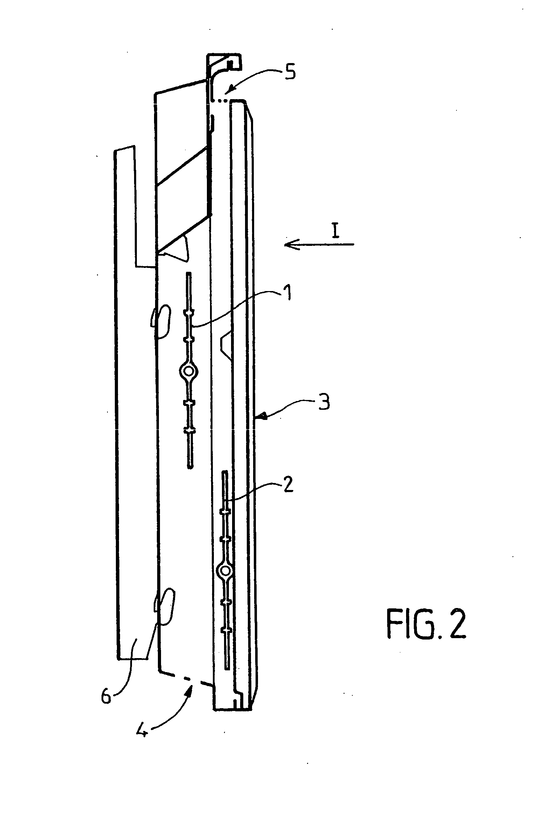

En référence aux Figures 1 et 2, les éléments identiques ou fonctionnellement équivalents sont repérés par des chiffres de référence identiques.

Un dispositif selon l'invention comporte un premier corps de chauffe supérieur 1 et un deuxième corps de chauffe inférieur 2. Les deux corps de chauffe 1 et 2 sont disposés à l'intérieur d'une enveloppe 3 permettant une circulation d'air ascendant à l'intérieur de l'enveloppe. A cet effet, l'enveloppe comporte un passage ou une grille 4 d'entrée d'air et un passage, une grille ou des ailettes 5 de sortie de l'air réchauffé par convection par les corps de chauffe 1 et 2 situés à l'intérieur de l'enveloppe 3.

Selon l'invention, le corps de chauffe 1 supérieur est disposé en retrait par rapport au corps de chauffe 2 inférieur, de manière à homogénéiser la température de la face avant de l'enveloppe.

La puissance du corps de chauffe 1 supérieur est avantageusement inférieure à la puissance du corps de chauffe 2 inférieur, et généralement comprise entre la moitié et les trois quarts de la puissance du corps de chauffe 2 inférieur.

De préférence, la puissance du corps de chauffe 1 supérieur est voisine des deux tiers de la puissance du corps de chauffe 2 inférieur : ainsi, pour un dispositif de chauffage électrique d'une puissance de mille watts, on répartit avantageusement cette puissance en une puissance de quatre cent watts pour le corps de chauffe 1 supérieur et une puissance de six cent watts pour le corps de chauffe 2 inférieur.

Le corps de chauffe inférieur 2 est plus long que le corps de chauffe supérieur 1, la différence entre la longueur du corps de chauffe 2 inférieur et la longueur du corps de chauffe 1 supérieur étant comprise entre un et dix centimètres, de préférence environ trois centimètres.

Chaque corps de chauffe 1 ou 2 présente une conformation à deux ailes sensiblement symétriques par rapport à leur élément chauffant central. Chaque aile est en forme de plaque sensiblement rectangulaire éventuellement nervurée et orientée dans un plan vertical à l'intérieur de l'enveloppe 3.

Le corps de chauffe 1 supérieur est disposé dans un plan vertical en retrait par rapport au plan vertical du corps de chauffe inférieur 2 d'une distance comprise généralement entre un et cinq centimètres. Cette disposition relative assure une canalisation de l'air ascendant entre l'arrière du corps de chauffe inférieur 2 et l'avant du corps de chauffe supérieur 1, et assure une homogénéité de la température de la face avant de l'enveloppe 3.

Grâce à l'invention, la température de surface extérieure du dispositif selon l'invention reste inférieure à 75° C en tout point de la face avant de l'enveloppe et des faces latérales.

Le dispositif selon l'invention peut être monté de manière connue en soi, à l'aide de supports 6 connus solidarisés à un mur.

Avantageusement, pour améliorer encore l'homogénéité de température des surfaces extérieures du dispositif selon l'invention, on peut utiliser des corps de chauffe 1 supérieur et 2 inférieur du genre décrit dans la demande de brevet français FR 02.00284, non publiée.

On peut par exemple utiliser des corps de chauffe 1 et 2 comportant un revêtement sur les bords latéraux et inférieur du corps de chauffe selon une conformation en U. Ce revêtement peut être réalisé par application d'une peinture noire résistante à la chaleur, d'une métallisation ou de tout autre revêtement présentant une bonne émissivité thermique.

Cette disposition améliore encore l'homogénéité thermique des corps de chauffe 1 et 2, et améliore par conséquent l'homogénéité thermique de la face avant de l'enveloppe 3, par exemple en limitant l'écart de température maximal entre deux points quelconques de la face avant à une valeur inférieure à 20° C.

L'enveloppe 3 est réalisée de préférence sous forme d'un caisson fermé obturé par une face avant, démontable pour la mise en place des corps de chauffe 1 et 2.

L'enveloppe 3 réalisée de préférence sous forme d'un caisson contient ou porte les moyens d'alimentation électrique, de régulation et de déclenchement en sécurité nécessaires au fonctionnement du dispositif selon l'invention. De manière connue, un logement 7 est ainsi prévu pour la fixation d'un boîtier de thermostat non représenté.

La partie supérieure interne de l'enveloppe 3 correspondant sensiblement à la hauteur d'un corps de chauffe 1 ou 2 ne contient pas de moyen de chauffage et permet le passage libre de l'air ascendant, et la sortie de l'air réchauffé par les ouvertures ou ailettes 5 de sortie d'air.

Cette combinaison permet au dispositif selon l'invention de fonctionner essentiellement en radiation, et accessoirement en convection, la circulation de l'air chaud à l'intérieur de l'enveloppe favorisant une bonne homogénéité de température à l'intérieur de l'enveloppe et, par conduction sur les faces extérieures de l'enveloppe accessibles au toucher.

L'invention décrite en référence à un mode de réalisation particulier n'y est nullement limitée, mais couvre au contraire toutes modifications de forme et toutes variantes de réalisation dans le cadre de l'invention, propres à homogénéiser la température de la face avant de l'enveloppe d'un dispositif selon l'invention.

## Revendications

1. Dispositif de chauffage électrique, fonctionnant en convection et en radiation, du type comportant une enveloppe (3) et deux corps de chauffe (1, 2) disposés l'un au-dessus de l'autre à l'intérieur de ladite enveloppe (3), **caractérisé en** combinaison par le fait que chaque corps de chauffe (1 ou 2) comporte au moins une aile orientée sensiblement verticalement à l'intérieur de l'enveloppe (3) ; et que le corps de chauffe supérieur (1) est disposé en retrait par rapport au corps de chauffe (2) inférieur, de manière à homogénéiser la température de la face avant de l'enveloppe (3).

2. Dispositif selon la revendication 1, **caractérisé par le fait que** la puissance du corps de chauffe (1) supérieur est comprise entre la moitié et les trois quarts de la puissance du corps de chauffe (2) inférieur.

3. Dispositif selon la revendication 2, **caractérisé par le fait que** la puissance du corps de chauffe (1) supérieur est voisine des deux tiers de la puissance du corps de chauffe (2) inférieur.

4. Dispositif selon l'une quelconque des revendications 1 à 3, **caractérisé par le fait que** la longueur du corps de chauffe (1) supérieur est inférieure à la longueur du corps de chauffe (2) inférieur.

5. Dispositif selon l'une quelconque des revendications précédantes, **caractérisé par le fait que** chaque corps de chauffe (1 ou 2) présente une conformation à deux ailes sensiblement symétriques par rapport à l'élément chauffant central du corps de chauffe.

6. Dispositif de chauffage électrique selon la revendication 5, **caractérisé par le fait que** chaque aile est en forme de plaque sensiblement rectangulaire orientée verticalement à l'intérieur de ladite enveloppe (3).

7. Dispositif de chauffage électrique selon la revendication 1, **caractérisé par le fait que** le corps de chauffe (1) supérieur est disposé dans un plan en retrait par rapport au plan du corps de chauffe (2) inférieur d'une distance comprise entre un et cinq centimètres.

8. Dispositif de chauffage électrique selon l'une quelconque des revendications précédentes, **caractérisé par le fait que** l'enveloppe (3) comporte des passages (4, 5) de circulation d'air à travers l'enveloppe (3).

9. Dispositif de chauffage électrique selon la revendication 8, **caractérisé par le fait que** les corps (1, 2) de chauffe sont agencés pour canaliser l'air circulant à l'arrière du corps de chauffe (2) inférieur et à l'avant du corps de chauffe(1) supérieur.

## Claims

1. Electric heating device operating using convection and radiation, of the type comprising a casing (3) and two heating bodies (1, 2) placed one on top of the other inside the said casing (3), **characterised in** combination by the fact that each of the heating bodies (1 or 2) comprises at least one wing orientated approximately vertically inside the casing (3); and by the fact that the upper heating body (1) is placed in a set back manner in relation to the lower heating body (2) so as to homogenise the temperature of the front face of the casing (3).

2. Device according to claim 1, **characterised by** the fact that the power of the upper heating body (1) is between half and three quarters the power of the lower heating body (2).

3. Device according to claim 2, **characterised by** the fact that the power of the upper heating body (1) is approaching two thirds of the power of the lower heating body (2).

4. Device according to any of claims 1 to 3, **characterised by** the fact that the length of the upper heating body (1) is less than the length of the lower heating body (2).

5. Device according to any of the previous claims, **characterised by** the fact that each of the heating bodies (1 or 2) has a structure with two wings, which are approximately symmetrical in relation to the central heating element of the heating body.

6. Electric heating device according to claim 5, **characterised by** the fact that each wing is in the form of a plate which is approximately rectangular orientated vertically inside the said casing (3).

7. Electric heating device according to claim 1, **characterised by** the fact that the upper heating body (1) is placed on a plane which is set back in relation to the plane of the lower heating body (2) by a distance between one and five centimetres.

8. Electric heating device according to any of the previous claims, **characterised by** the fact that the casing (3) comprises air circulation passages (4, 5) through the casing (3).

9. Electric heating device according to claim 8, **characterised by** the fact that the heating bodies (1, 2) are equipped to channel the air circulating behind the lower heating body (2) and in front of the upper heating body (1).

## Patentansprüche

1. Elektrische Heizvorrichtung, die mittels Konvexion wie auch mittels Radiation arbeitet, der Art mit einem Gehäuse (3) und zwei Heizkörpern (1, 2), die im Inneren des Gehäuses (3) übereinander angeordnet sind, als Kombination **dadurch gekennzeichnet, daß** jeder Heizkörper (1 oder 2) mindestens einen im wesentlichen vertikal ausgerichteten Flügel im Inneren des Gehäuses (3) umfaßt, und daß der obere Heizkörper (1) relativ zum unteren Heizkörper (2) zurückgesetzt angeordnet ist, um die Temperatur an der Vorderseite des Gehäuses (3) zu homogenisieren.

2. Vorrichtung nach Anspruch 1, **dadurch gekennzeichnet, daß** die Leistung des oberen Heizkörpers (1) bei der Hälfte bis drei Viertel der Leistung des unteren Heizkörpers (2) liegt.

3. Vorrichtung nach Anspruch 2, **dadurch gekennzeichnet, daß** die Leistung des oberen Heizkörpers (1) annähernd zwei Drittel der Leistung des unteren Heizkörpers (2) beträgt.

4. Vorrichtung nach einem der Ansprüche 1 bis 3, **dadurch gekennzeichnet, daß** die Länge des oberen Heizkörpers (1) kleiner als die Länge des unteren Heizkörpers (2) ist.

5. Vorrichtung nach einem der vorhergehenden Ansprüche, **dadurch gekennzeichnet, daß** jeder Heizkörper (1 oder 2) eine Gestaltung mit zwei im wesentlichen symmetrisch zum zentralen Heizelement des Heizkörpers verlaufenden Flügeln aufweist.

6. Elektrische Heizvorrichtung nach Anspruch 5, **dadurch gekennzeichnet, daß** jeder Flügel in Form einer im wesentlichen rechteckigen Platte vorliegt, die im Inneren des Gehäuses (3) vertikal ausgerichtet ist.

7. Elektrische Heizvorrichtung nach Anspruch 1, **dadurch gekennzeichnet, daß** der obere Heizkörper (1) in einer Ebene angeordnet ist, die relativ zur Ebene des unteren Heizkörpers (2) um einen Abstand von einem bis fünf Zentimetern zurückgesetzt ist.

8. Elektrische Heizvorrichtung nach einem der vorhergehenden Ansprüche, **dadurch gekennzeichnet, daß** das Gehäuse (3) Durchlässe (4, 5) zur Zirkulation von Luft durch das Gehäuse (3) aufweist.

9. Elektrische Heizvorrichtung nach Anspruch 8, **dadurch gekennzeichnet, daß** die Heizkörper (1, 2) dazu eingerichtet sind, die an der Rückseite des unteren Heizkörpers (2) und an der Vorderseite des oberen Heizkörpers (1) zirkulierende Luft zu kanalisieren.
